# EUROPEAN PATENT APPLICATION

(11) **EP 2 017 760 A2**
(43) Date of publication of application: **21.01.2009**
(21) Application number: 07121662.6
(22) Date of filing: 27.11.2007
(51) Int. Cl.: G06F 21/00

(54) **Compatible system of digital rights management and method for operating the same**

(30) Priority: 06.07.2007 KR 20070068253
(71) Applicant: HYUNDAI MOTOR COMPANY, Seoul 137-130 (KR)
(72) Inventor: Lim, Ji Hyun, Kyunggi-do 440-050 (KR)
(74) Representative: Viering, Jentschura & Partner

(57) **Abstract**

Disclosed is a compatible system of digital rights management which enables the reproduction of the same contents between apparatuses each employing a different digital rights management system. The compatible system of digital rights management comprises: a user server including a first authentication document of a first apparatus; a second apparatus connected to the first apparatus and outputting a contents request signal and a second authentication document to reproduce substantially the same contents; and a provider server forming a virtual safe channel with the user server based on the contents request signal to receive the first authentication document, and generating first and second licenses encrypted through the first and second authentication documents to transmit the same to the second apparatus.

## Description

### BACKGROUND OF THE INVENTION

### 1.Field of the Invention

The present invention relates to a compatible system of digital rights management and a method for operating the same, and more particularly, to a compatible system of digital rights management, which enables the reproduction of the same contents between apparatuses each employing a different digital rights management system, and a method for operating the same.

### Discussion of the Related Art

Generally, audio/video and various types of contents provided via various types of wired and wireless communications networks, such as the Internet and wireless communications, or via networks, such as a broadcasting network, are only executable by digital rights management (DRM) servers supporting the copyright management of the corresponding contents format.

At present, with a variety of DRM servers being widely distributed, all the DRM servers do not provide the compatibility of contents, and contents as well do not comply with one standard, which limits the use of contents by a user.

However, as even the apparatuses used by the same user uses a different DRM system, the use of contents is limited depending on each DRM system, and there occurs a difficulty in compatibility of contents between different DRM apparatuses.

For example, in order to make contents compatible, there is the inconvenience that a first DRM system server has to convert contents according to a second DRM system for supplying them. Also, it is difficult to provide an intrinsic interface between different DRM system servers.

Accordingly, in recent years, there have been studies on a system and method for compatibility between apparatuses and servers employing a different DRM system.

### SUMMARY OF THE INVENTION

A compatible system of digital rights management in accordance with the present invention comprises: a user server including a first authentication document of a first apparatus; a second apparatus connected to the first apparatus and outputting a contents request signal and a second authentication document to reproduce substantially the same contents; and a provider server forming a virtual safe channel with the user server based on the contents request signal to receive the first authentication document, and generating first and second licenses encrypted through the first and second authentication documents to transmit the same to the second apparatus.

Additionally, a method for operating a compatible system of digital rights management in accordance with the present invention comprises the steps of: transmitting a second authentication document and a contents request signal to a provider server from a second apparatus via a network; forming a virtual safe channel between a user server and the provider server based on the second authentication document and the contents request signal; transmitting a first authentication document on a first apparatus to the provider server from the user server via the virtual safe channel; and generating first and second licenses from the provider server based on the first and second authentication documents and transmitting the same to the first apparatus.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a system view showing a compatible system of digital rights management in accordance with the present invention; and
FIG. 2 is a sequence view showing a method for operating a compatible system of digital rights management in accordance with the present invention.

### DETAILED DESCRIPTION OF THE PREFERRED EMBODIMENTS

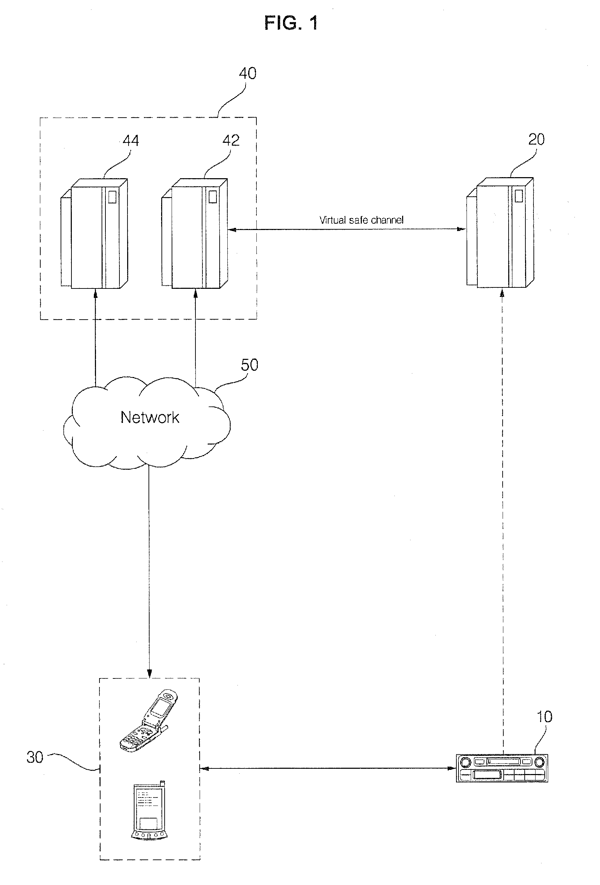

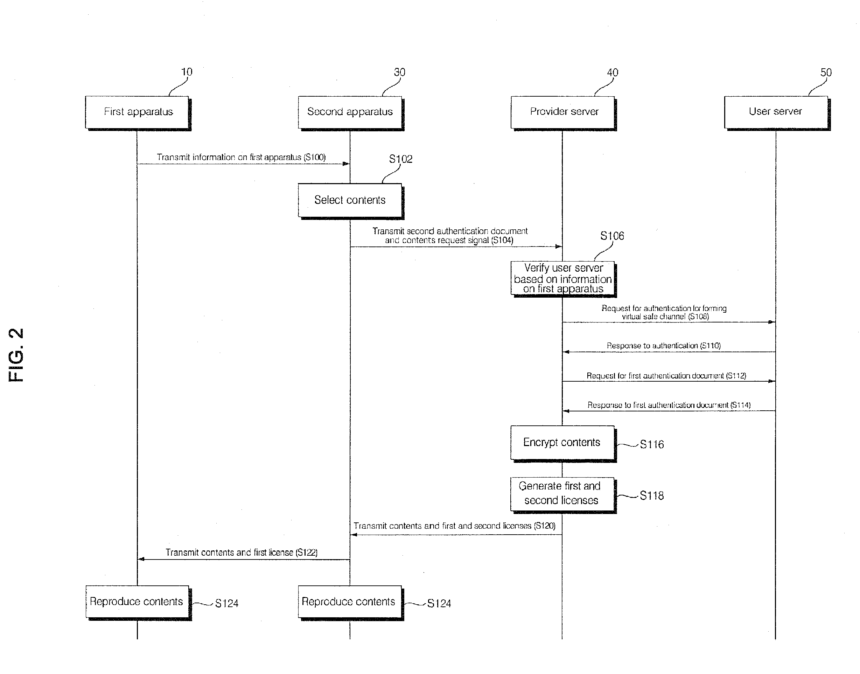

Hereinafter, a preferred embodiment of the present invention will be described with reference to FIGs. 1 and 2.

FIG. 1 is a system view showing a compatible system of digital rights management in accordance with the present invention.

Referring to FIG. 1, the compatible system of digital rights management in accordance with the present invention includes a first apparatus 10, a user server 20 for storing a first authentication document of the first apparatus 10, a second apparatus 20 for selecting one of different contents and reproducing the same, and a provider server 40 for transmitting the contents selected from the second apparatus 30 to the second apparatus 30.

Here, the first apparatus 10 is operated in connection with an external another apparatus to reproduce the contents. That is, the first apparatus 10 is an apparatus which is connected to the second apparatus 30 to reproduce the contents that are reproduced in the second apparatus 30, and which is not connected to the provider server 40 and a network 50.

The user server 20 stores the first authentication document of the first apparatus 10, and when the first authentication document of the first apparatus 10 is requested from the provider server 40 via a virtual safe channel with the provider server 40 upon receipt of a contents request signal to the provider server 40 from the second apparatus 30 operating in connection with the first apparatus 10, the user server 20 transmits the first authentication document.

The second apparatus 30 transmits the contents request signal and a second authentication document via the provider server 40 and the network 50. In other words, if the second apparatus 30 operates in connection with the first apparatus 10, it transmits the contents request signal containing information on the first apparatus 10 and information on the contents.

Here, the second apparatus 30 is at least one of a mobile communication terminal, a navigation device, and a video player that form the provider server 40 and the network 50, and works together with the first apparatus 10.

After transmitting the contents request signal, the second apparatus 30 receives first and second licenses containing the contents and the copyright to the contents from the provider server 40 via the network 50.

Then, the second apparatus 30 transmits the contents to be reproduced in the first apparatus and the first license to the first apparatus 10.

The provider server 40 forms a virtual safe channel with the user server 20 based on the second authentication document and the contents request signal that are transmitted from the second apparatus 30.

Here, the provider server 40 transmits the second authentication document of the second apparatus 30 to the user server 20, and the user server 20 forms the virtual safe channel once the first authentication document of the first apparatus 10 is transmitted.

That is, the provider server 40 performs a PKI(public key infrastructure)-based mutual authentication with the user server 20, determines whether the user server 20 is reliable by exchanging the first and second authentication documents of the first and second apparatuses 10 and 30, and then forms the virtual safe channel.

The provider server 40 includes an object management server 42 for generating the first and second licenses through the first and second authentication documents and transmitting them to the second apparatus 30 and a contents storage server 44 for transmitting the contents.

The object management sever 42 transmits the first and second licenses encrypted with encryption keys contained in the first and second authentication documents, respectively, to the second apparatus 30.

Here, the first and second apparatuses 10 and 30 encodes the contents by encoding keys contained in the first and second authentication documents, respectively, in order to reproduce the contents, and then reproduce the same through the first and second licenses.

That is, the first and second apparatuses 10 and 30 are connected to a USB cable or a data transmission cable.

Here, the encryption of the contents is performed under DES, SHA, RC4, MAC, Seed, etc. that are generally used, and the encryption algorithms are not limited thereto.

FIG. 2 is a sequence view showing a method for operating a compatible system of digital rights management in accordance with the present invention.

Referring to FIG. 2, in the method for operating a compatible system of digital rights management in accordance with the present invention, when a first apparatus and a second apparatus are connected, information on the first apparatus is transmitted to the second apparatus (S100), and when the second apparatus selects contents (S102), a contents request signal is transmitted to a provider server (S104).

In other words, after the second apparatus 30 is connected to the first apparatus 10, when the second apparatus 30 selects the contents for reproducing the contents along with the first apparatus 10, it transmits a contents request signal to the provider server 40 through the network 50.

Once the contents request signal is transmitted, the provider server verifies the user server based on the information on the first apparatus (S106), requests the user server for authentication for forming a mutual virtual safe channel (S108), and the user server requests for a response to the authentication transmitted from the provider server (S110).

In other words, the provider server 40 verifies the user server 20 having the first authentication document of the first apparatus 10 stored therein based on the information on the first apparatus 10 contained in the contents request signal.

At this time, the provider server 40 performs a separate PKI(Public key Infrastructure)-based mutual authentication with the user server 20 in order to form a virtual safe channel with the user server 20, thereby ensuring the mutual reliability between the servers.

Here, the procedure of authentication of the provider server 40 and the user server 20 for the formation of a virtual channel will be described below by way of example.

The provider server 40 transmits an authentication request signal HELLO to the user server 20 in order to authenticate a rights object server 42 between them.

Here, the authentication request signal HELLO represents general information for description, and its format employs a general password verification algorithm.

That is, the authentication request signal HELLO has to contain at least one individual information for the safety and reliability of the provider server 40 and the user server 20, and the user server 20 verifies the provider server 40 based on the at least one individual information contained in the authentication request signal HELLO transmitted from the provider server 40, and transmits an authentication verification signal HELLO to the provider server 40.

In this way, once authentication verification is completed, the provider server 40 and the user server 30 transmit an RI intrinsic value of the rights object server between them to execute the authentication of the rights object server between them.

Accordingly, when the authentication of the rights object server is completed, the virtual safe channel is formed.

When the virtual safe channel with the user server is formed, the provider server requests for the first authentication document (S112), and receives the first authentication document from the user server (S114).

In other words, when the mutual authentication is completed and the virtual safe channel is formed, the provider server 40 requests the user server 20 for the first authentication document.

The user server 20 transmits to the provider server 40 the first authentication document stored according to the request for the first authentication document from the provider server 40.

Once the first authentication document is transmitted, each of the contents is encrypted based on the encryption keys contained in the first and second authentication documents (S116), and the first and second licenses are generated (S118).

In other words, the provider server 40 encrypts each of the contents to be reproduced in the first and second apparatuses 10 and 30 by the encryption keys contained in the first and second authentication documents.

Here, each of the contents to be transmitted to the first and second apparatuses 10 and 30 and reproduced is differently encrypted by their respective digital rights management.

Further, the provider server 40 encrypts and generates the first and second licenses containing information on the contents by the encryption keys contained in the first and second authentication documents.

The first and second apparatuses 10 and 30 that encode the first and second licenses stores their encryption keys differently in the first and second authentication documents, and the encryption keys are not compatible.

The provider server transmits the first and second licenses and the contents to the second apparatus (S120), and the second apparatus transmits the first license and the contents to the first apparatus (S122).

In other words, the provider server 40 transmits the first and second licenses and the contents to the second apparatus 30.

The second apparatus 30 transmits the transmitted first license and contents to the first apparatus 10.

The first and second apparatuses reproduce the contents by using the first and second licenses.

The compatible system of digital rights management has the advantage of reproducing contents by another apparatus desired even under a different digital rights management system by working together with the audio system of a car and a mobile communication terminal, receiving a license from the provider server providing MP3 music to the mobile communication terminal and reproducing the same MP3 music.

Although the present invention has been described in detail with respect to the preferred embodiment of the invention, it should be understood that a person having an ordinary skill in the art to which the present invention pertains can make various modifications and changes to the present invention without departing from the spirit and scope of the invention defined by the appended claims. Therefore, further modifications to the embodiment of the invention will fall within the scope of the invention.

The compatible system of digital rights management and the method for operating the same in accordance with the present invention has the effect of making contents efficiently compatible without exposing the interface between different digital rights management systems by transmitting first and second licenses for first and second apparatuses to the second apparatus connectable to a network, the first and second apparatuses being applicable to different digital rights management systems so that the first and second apparatuses can substantially use the same contents.

## Claims

1. A compatible system of digital rights management, comprising:
a user server including a first authentication document of a first apparatus;
a second apparatus connected to the first apparatus and outputting a contents request signal and a second authentication document to reproduce substantially the same contents; and
a provider server forming a virtual safe channel with the user server based on the contents request signal to receive the first authentication document, and generating first and second licenses encrypted through the first and second authentication documents to transmit the same to the second apparatus.

2. The system of claim 1, wherein the contents request signal contains information on the first apparatus and information on the contents selected from the second apparatus.

3. The system of claim 1, wherein the provider server forms the virtual safe channel with the user server based on the information on the first apparatus.

4. The system of claim 1, wherein the provider server encrypts the first license with an encryption key contained in the first authentication document and the second license with an encryption key contained in the second authentication document.

5. The system of claim 4, wherein the first and second licenses are differently encrypted.

6. The system of claim 4, wherein the first and second apparatuses encodes the first and second licenses by encoding keys stored in the first and second apparatuses.

7. A method for operating a compatible system of digital rights management, comprising the steps of:
transmitting a second authentication document and a contents request signal to a provider server from a second apparatus via a network;
forming a virtual safe channel between a user server and the provider server based on the second authentication document and the contents request signal;
transmitting a first authentication document on a first apparatus to the provider server from the user server via the virtual safe channel; and
generating first and second licenses from the provider server based on the first and second authentication documents and transmitting the same to the first apparatus.

8. The method of claim 7, wherein in a case where the first and second apparatuses are connected to substantially reproduce the same contents, information on the first apparatus is contained in the contents request signal.

9. The method of claim 7, wherein the first and second licenses are differently formed by encryption keys contained in the first and second authentication documents.

10. The method of claim 7, wherein the first and second licenses and contents are encoded by the encoding key stored in the first and second apparatuses.
